Europäisches Patentamt

European Patent Office

Office européen des brevets

(19)

(11) Publication number: **0 010 367**
**B1**

(12) **EUROPEAN PATENT SPECIFICATION**

(45) Date of publication of patent specification: **14.10.81**

(21) Application number: **79301992.8**

(22) Date of filing: **25.09.79**

(51) Int. Cl.³: **C 22 B 3/00, C 22 B 11/04, C 22 B 15/12, C 22 B 23/04**

(54) Method of recovering metal values.

(30) Priority: **26.09.78 ZA 785463**

(43) Date of publication of application:
**30.04.80 Bulletin 80/9**

(45) Publication of the grant of the European patent:
**14.10.81 Bulletin 81/41**

(84) Designated Contracting States:
**CH DE FR GB IT**

(56) References cited:
**DE - A1 - 2 731 029**
**US - A - 3 970 737**

(73) Proprietor: **Anglo American Corporation of South Africa Limited**
**44 Main Street**
**Johannesburg Transvaal (ZA)**

(72) Inventor: **Davidson, Raymond John**
**5 Max Michaelis Street Montgomery Park**
**Johannesburg Transvaal (ZA)**
Inventor: **Veronese, Vittorio**
**19 Lewis Drive Horizon View**
**Roodepoort Transvaal (ZA)**

(74) Representative: **Warren, Keith Stanley, et al**
**BARON & WARREN**
**16 Kensington Square**
**London W8 5HL (GB)**

Courier Press, Leamington Spa, England.

## Method of recovering metal values

This invention relates to metal value recovery, in particular to the recovery of gold, silver, nickel or copper metal values from solution.

A method of recovering the above metals from supports on which they are adsorbed as complexes is covered by U.S.—A. 3,970,737. According to this method, the metal values are desorbed after pre-treatment by contacting the support with water of low metal cation concentration. The water preferably has a low-multi-charged cation (e.g. alkaline earth metal cation) concentration. Concentrations less than 300 ppm, preferably less than 100 ppm, are preferred. In other words the water is relatively pure and has a low ionic strength. Suitable waters are for example distilled, deionised and otherwise softened waters.

The above method has particular application to metal values in the form of cyanide ionic complexes, the metal value forming the anionic portion of the complex. Any suitable adsorbent support may be used, carbon, particularly activated carbon, being preferred.

It is also disclosed that when the cation associated with the complex is an alkaline earth metal, the complex is adsorbed on to the support very much more strongly than when the cation is an alkali metal, particularly when the complex is a gold cyanide one. Accordingly, if the cation of the complex is an alkaline earth metal, particularly calcium, the support is preferably pre-treated with an alkali metal salt solution prior to water desorption.

Our ZA—A—76/4204 describes and claims an improved pre-treatment solution selected from the group of an alkali metal cyanide solution, an alkali metal hydroxide solution and a mixture thereof.

According to the present invention, a pre-treatment reagent for an elution process as described above comprises a mixture of an organic solvent and an alkali metal salt and/or hydroxide solution.

Thus, the invention provides a method of recovering metal values selected from gold, silver, copper and nickel from a carbon support having one or more of these values adsorbed thereon in the form of an alkaline earth metal ionic complex, the metal value forming part of the anionic portion thereof, including the steps of contacting the support with a pre-treatment reagent, followed by desorbing the metal values from the support with water having a low concentration of metal cations characterised in that the pre-treatment reagent is a mixture of:—

(a) an organic solvent, and

(b) a solution selected from the group of an alkali metal cyanide solution, an alkali metal hydroxide solution and a mixture thereof.

The organic solvent may be an alcohol such as isopropyl alcohol or a ketone such as acetone.

Generally, the organic solvent will be present in an amount of from 1 to 10, typically 5, percent by volume of the pre-treatment reagent.

An example of a suitable solution for the reagent is one containing an alkali metal cyanide concentration in the range 1 to 10 percent by weight and an alkali metal hydroxide concentration in the range 0,1 to 20 percent by weight. An example of another suitable solution for the reagent is an alkali metal hydroxide solution of concentration 0,1 to 20 percent by weight.

The pre-treatment will generally be about a half to one bed volume.

The pre-treatment is followed, as mentioned above, by the water elution in the manner described in the above mentioned patents.

It has been found that metal values, particularly gold and silver values, can be eluted from activated carbon absorbents at high elution rates and using relatively small volumes of eluant. Consequently, the eluant contains a high metal concentration which is advantageous, particularly for subsequent electro-winning processes.

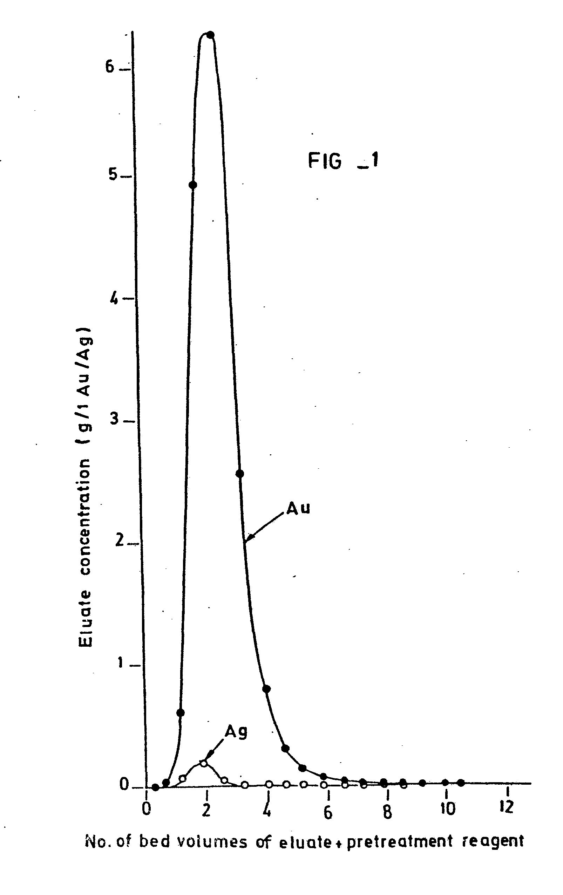

A number of experiments have been carried out using the pre-treatment reagent of the invention. The results thereof are illustrated graphically by the attached Figures 1 to 3:

Figure 1: This graph illustrates the elution of gold and silver from an activated carbon. The carbon was loaded with gold and silver from a cyanide leach solution which had a high base metal content. The loaded carbon contained 1,9 percent by weight gold and 0,5 percent by weight silver The pre-treatment reagent contained 95 volume percent cyanide solution (5% NaCN/O,5%NaOH) and 5 volume percent isopropyl alcohol. The extent of pre-treatment was one bed volume. The eluant was deionised water and the elution rate was 2 bed volumes per hour.

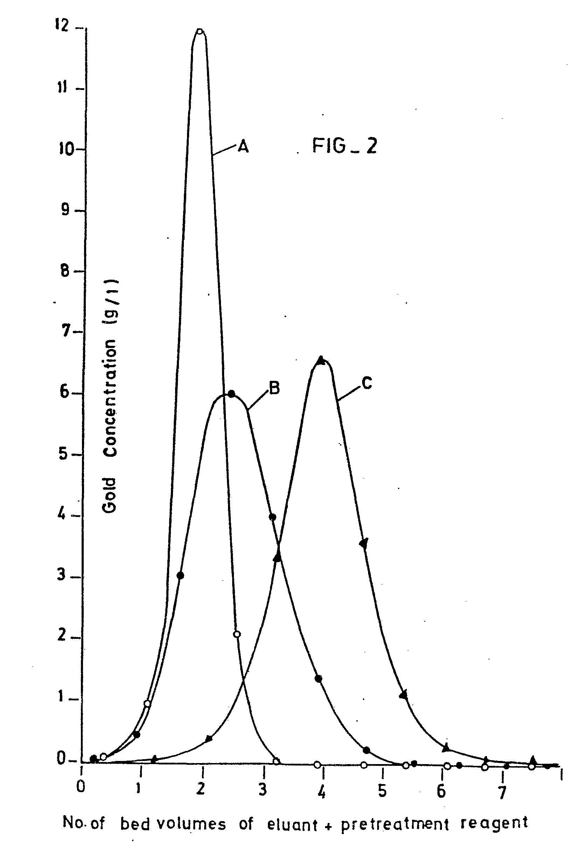

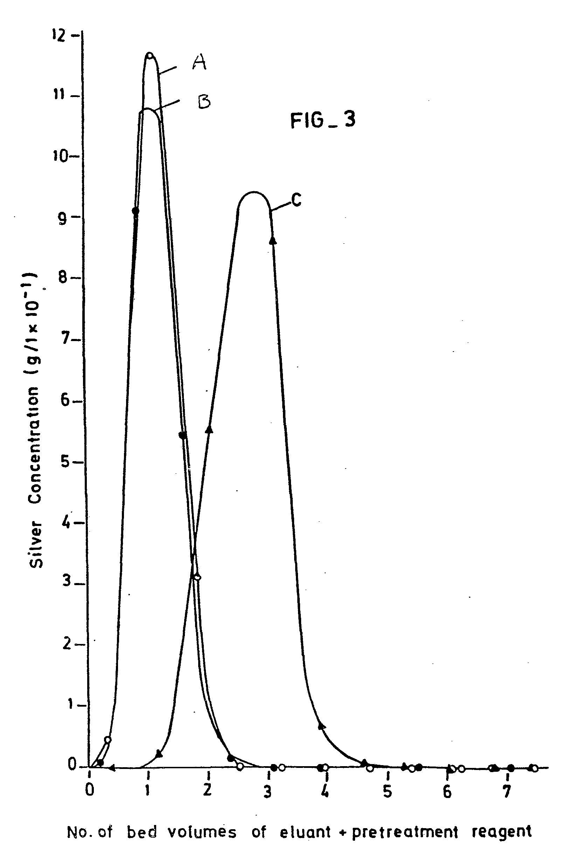

Figures 2 and 3: These graphs illustrate the elution of gold and silver from an activated carbon which was pre-treated with a number of pre-treatment reagents. The gold and silver was adsorbed on to the carbon from a cyanide leach solution which contained a low concentration of base metals.

The loaded carbon contained about 4 percent by weight gold and about 0,5 percent by weight silver. The pre-treatment was one bed volume. The eluant was deionised water and the elution rate was 2 bed volumes per hour.

On these graphs the lines A, B and C represent the results obtained with the following pre-treatment reagents:

A: 95 vol % of a solution containing 0,5% NaOH and 5% NaCN and 5 vol % of isopropyl alcohol.

B: A solution containing 10%NaCN and 1% NaOH.

C: 95 vol % of a solution containing 2,5% NaCN and 0,25% NaOH and 5 vol % isopropyl alcohol.

## Claims

1. A method of recovering metal values selected from gold, silver, copper and nickel from a carbon support having one or more of these values adsorbed thereon in the form of an alkaline earth metal ionic complex, the metal value forming part of the anionic portion thereof, including the steps of contacting the support with a pre-treatment reagent, followed by desorbing the metal values from the support with water having a low concentration of metal cations characterised in that the pre-treatment reagent is a mixture of:—

(a) an organic solvent, and

(b) a solution selected from the group of an alkali metal cyanide solution, an alkali metal hydroxide solution and a mixture thereof.

2. A method according to claim 1 wherein the organic solvent is present in the mixture in an amount of 1 to 10 percent by volume.

3. A method according to claim 1 wherein the organic solvent is present in the mixture in an amount of 5 percent by volume.

4. A method according to any one of the preceding claims wherein the organic solvent is an alcohol or a ketone.

5. A method according to claim 4 wherein the alcohol is isopropyl alcohol or the ketone is acetone.

6. A method according to any one of the preceding claims wherein the solution contains an alkali metal cyanide of concentration in the range 1 to 10 percent by weight and an alkali metal hydroxide of concentration in the range 0,1 to 20 percent by weight.

7. A method according to any one of claims 1 to 5 wherein the solution is an alkali metal hydroxide solution of concentration 0,1 to 20 percent by weight.

8. A method according to any one of the preceding claims wherein the carbon support is activated carbon.

9. A method according to any one of the preceding claims wherein the water having a low concentration of metal cations is deionised, distilled or otherwise softened water.

## Patentansprüche

1. Verfahren zur Gewinnung von metallischen Bestandteilen an Gold, Silber, Kupfer und Nickel von einem Kohlenstoffträger, der einen oder mehrere dieser Bestandteile in Form eines ionischen Erdalkalikomplexes adsorbiert hat, wovon der metallische Bestandteil Teil des anionischen Anteils bildet, wobei der Träger mit einem Vorbehandlungsreagenz in Kontakt gebracht wird und anschließend die Metallbestandteile vom Träger mit Hilfe von Wasser desorbiert werden, das eine niedrige Konzentration an Metallkationen hat, dadurch gekennzeichnet, daß das Vorbehandlungsreagenz eine Mischung ist aus:

(a) einem organischem Lösungsmittel und

(b) einer Lösung, die ausgewählt ist aus der Gruppe einer Alkalimetallzyanidlösung, einer Alkalimetallhydroxidlösung und einer Mischung hieraus.

2. Verfahren nach Anspruch 1, dadurch gekennzeichnet, daß das organische Lösungsmittel in der Mischung in einer Größenordnung von 1 bis 10 Vol-% vorliegt.

3. Verfahren nach Anspruch 1, dadurch gekennzeichnet, daß das organische Lösungsmittel in der Mischung in einer Größenordnung von 5 Vol.-% vorliegt.

4. Verfahren nach einem der vorhergehenden Ansprüche, dadurch gekennzeichnet, daß das organische Lösungsmittel ein Alkohol oder ein Keton ist.

5. Verfahren nach Anspruch 4, dadurch gekennzeichnet, daß der Alkohol Isopropylalkohol oder das Keton Aceton ist.

6. Verfahren nach einem der vorhergehenden Ansprüche, dadurch gekennzeichnet, daß die Lösung ein Alkalimetallzyanid mit einer Konzentration in der Größenordnung von 1 bis 10 Gew.-% und ein Alkalimetallhydroxid mit einer Konzentration in der Größenordnung von 0,1 bis 20 Gew.-% enthält.

7. Verfahren nach einem der Ansprüche 1 bis 5, dadurch gekennzeichnet, daß die Lösung eine Alkalimetallhydroxidlösung mit einer Konzentration von 0,1 bis 20 Gew.-% ist.

8. Verfahren nach einem der vorhergehenden Ansprüche, dadurch gekennzeichnet, daß der Kohlenstoffträger ein aktivierter Kohlenstoff ist.

9. Verfahren nach einem der vorhergehenden Ansprüche, dadurch gekennzeichnet, daß das Wasser, das eine niedrige Konzentration an Metallkationen hat, entionisiert ist, destilliert ist oder auf andere Weise enthärtetes Wasser ist.

## Revendications

1. Procédé de récupération de métaux choisis parmi l'or, l'argent, le cuivre et le nickel à partir d'un support en carbone présentant l'un ou plusieurs de ces métaux adsorbés sur ledit support sous la forme d'un complexe ionique d'un métal alcalino terreux, le métal formant part de la partie anionique de celui-ci, comprenant les étapes de mise en contact du support avec un réactif de prétraitement, suivi d'une désorption des métaux à partir du support avec de l'eau ayant une faible concentration en cations métalliques, caractérisé en ce que le réactif de prétraitement est un mélange

(a) d'un solvant organique, et

(b) d'une solution choisie parmi le groupe d'une solution de cyanure d'un métal alcalin, d'une solution d'hydroxyde d'un métal alcalin et d'un mélange de celles-ci.

2. Procédé selon la revendication 1, caractérisé en ce que le solvant organique est présent dans le mélange à raison de 1 à 10 % en volume.

3. Procédé selon la revendication 1, caractérisé en ce que le solvant organique est présent dans le mélange à raison de 5 % en volume.

4. Procédé selon la revendication 1, caractérisé en ce que le solvant organique est un alcool ou une cétone.

5. Procédé selon l'une quelconque des revendications précédentes, caractérisé en ce que l'alcool est l'alcool isopropylique et la cétone est l'acétone.

6. Procédé selon l'une quelconque des revendications précédentes, caractérisé en ce que la solution contient un cyanure d'un métal alcalin de concentration allant de 1 à 10 % en poids et un hydroxyde d'un métal alcalin de concentration allant de 0,1 à 20 % en poids.

7. Procédé selon l'une quelconque des revendications 1 à 5, caractérisé en ce que la solution est une solution d'un hydroxyde d'un métal alcalin de concentration allant de 0,1 à 20 % en poids.

8. Procédé selon l'une quelconque des revendications précédentes, caractérisé en ce que le support de carbone est du carbone activé.

9. Procédé selon l'une quelconque des revendications précédentes, caractérisé en ce que l'eau présentant une faible concentration en cations métalliques est de l'eau déionisée, distillée ou bien adoucie.

0010367

FIG _1

No. of bed volumes of eluate + pretreatment reagent

1

0 010 367

FIG _ 2

Gold Concentration (g/l)

No. of bed volumes of eluant + pretreatment reagent

2

FIG_3